# EUROPEAN PATENT APPLICATION

(11) **EP 4 140 287 A1**
(43) Date of publication of application: **01.03.2023**
(21) Application number: 22193291.6
(22) Date of filing: 31.08.2022
(51) Int. Cl.: A01D 61/00, A01F 12/10

(54) **FEEDER HOUSING WITH INDEPENDENTLY DRIVEN ROCK BEATER**

(30) Priority: 31.08.2021 US 202117462923
(71) Applicant: CNH Industrial Belgium NV, 8210 Zedelgem (BE)
(72) Inventor: HAMMER, Kevin, Eldridge, 57248 (US)
(74) Representative: CNH Industrial IP Department

(57) **Abstract**

A feeder housing (120) for an agricultural harvester (100) includes: a housing (121); a conveyor system (200) disposed in the housing (121), the conveyor system (200) including a drive shaft (212), at least one drive loop (230) coupled to the drive shaft (212) such that rotation of the drive shaft (212) causes rotation of the at least one drive loop (230), and a plurality of crop grabbers (232) coupled to the at least one drive loop (230); and a rock beater (220) disposed in the housing (121) and including a rotatable beater roll (221) and at least one fin (222) carried by the beater roll (221). A motor (240) is coupled to the beater roll (221) and configured to rotate the beater roll (221), the motor (240) includes an electrically powered motor or a hydraulically powered motor, the motor (240) is coupled to the beater roll (221) such that the motor (240) is configured to rotate the beater roll (221) without rotating the drive shaft (212).

## Description

### FIELD OF THE INVENTION

The present invention pertains to an agricultural harvester and, more specifically, to a feeder housing for an agricultural harvester.

### BACKGROUND OF THE INVENTION

An agricultural harvester known as a "combine" is historically termed such because it combines multiple harvesting functions with a single harvesting unit, such as picking, threshing, separating, and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris toward the rear of the combine. Non-grain crop material such as straw from the threshing section proceeds through a residue handling system, which may utilize a straw chopper to process the non-grain material and direct it out the rear of the combine. When the grain tank becomes full, the combine is positioned adjacent a vehicle into which the grain is to be unloaded, such as a semitrailer, gravity box, straight truck, or the like, and an unloading system on the combine is actuated to transfer the grain into the vehicle.

More particularly, a rotary threshing or separating system includes one or more rotors that can extend axially (front to rear) or transversely (side to side) within the body of the combine, and which are partially or fully surrounded by perforated concaves. The crop material is threshed and separated by the rotation of the rotor within the concaves. Coarser non-grain crop material such as stalks and leaves pass through a straw beater to remove any remaining grains, and then are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through vertically arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve), where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material which passes through the upper sieve, but does not pass through the lower sieve, is directed to a tailings pan. Grain falling through the lower sieve lands on a bottom pan of the cleaning system, where it is conveyed forwardly toward a clean grain auger. The clean grain auger conveys the grain to a grain elevator, which transports the grain upwards to a grain tank for temporary storage. The grain accumulates to the point where the grain tank is full and is discharged to an adjacent vehicle such as a semi trailer, gravity box, straight truck or the like by an unloading system on the combine that is actuated to transfer grain into the vehicle.

Many known feeder housings are provided with a rock trap, which includes a rotatable beater that carries one or more fins. The fins separate rocks and other solid objects from crop material as the beater rotates, with the crop material traveling further into the combine while rocks and other solid objects are collected in a rock sump. While such systems are effective for removing rocks and other solid objects from the crop material, there are instances where it would be desirable to adjust the rotational speed of the beater.

What is needed in the art is a way to adjust a rotational speed of a beater of a rock trap in a feeder housing.

### SUMMARY OF THE INVENTION

Exemplary embodiments provided according to the present disclosure provide a feeder housing with a rock beater that includes a beater roll driven by a motor that is electrically or hydraulically powered and does not rotate a drive shaft that drives rotation of one or more drive loops.

In some exemplary embodiments provided according to the present disclosure, a feeder housing for an agricultural harvester includes: a housing; a conveyor system disposed in the housing, the conveyor system including a drive shaft, at least one drive loop coupled to the drive shaft such that rotation of the drive shaft causes rotation of the at least one drive loop, and a plurality of crop grabbers coupled to the at least one drive loop; a rock beater disposed in the housing and including a rotatable beater roll and at least one fin carried by the beater roll; and a motor coupled to the beater roll and configured to rotate the beater roll, the motor comprising an electrically powered motor or a hydraulically powered motor, the motor being coupled to the beater roll such that the motor is configured to rotate the beater roll without rotating the drive shaft.

In some exemplary embodiments provided according to the present disclosure, an agricultural vehicle includes: a chassis; a header carried by the chassis, the header including at least one cutter configured to cut crop material; and a feeder housing carried by the header and configured to receive crop material cut by the header. The feeder housing includes: a housing; a conveyor system disposed in the housing, the conveyor system including a drive shaft, at least one drive loop coupled to the drive shaft such that rotation of the drive shaft causes rotation of the at least one drive loop, and a plurality of crop grabbers coupled to the at least one drive loop; a rock beater disposed in the housing and including a rotatable beater roll and at least one fin carried by the beater roll; and a motor coupled to the beater roll and configured to rotate the beater roll, the motor comprising an electrically powered motor or a hydraulically powered motor, the motor being coupled to the beater roll such that the motor is configured to rotate the beater roll without rotating the drive shaft.

One possible advantage that may be realized by exemplary embodiments provided according to the present disclosure is that a rotational speed of the beater roll can be easily adjusted without affecting rotation of the drive shaft and drive loop(s) so crop material conveyance in the feeder housing is not affected.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 illustrates a side view of an exemplary embodiment of an agricultural vehicle, the agricultural vehicle comprising a header and a feeder housing, in accordance with an exemplary embodiment of the present invention;
FIG. 2 illustrates a perspective view of a conveyor system and a rock beater of the feeder housing of FIG. 1, in accordance with an exemplary embodiment of the present invention; and
FIG. 3 illustrates a side view of the conveyor system and the rock beater of the feeder housing of FIG. 1, in accordance with an exemplary embodiment of the present invention.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also, the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting. The terms "downstream" and "upstream" are determined with reference to the intended direction of crop material flow during operation, with "downstream" being analogous to "rearward" and "upstream" being analogous to "forward."

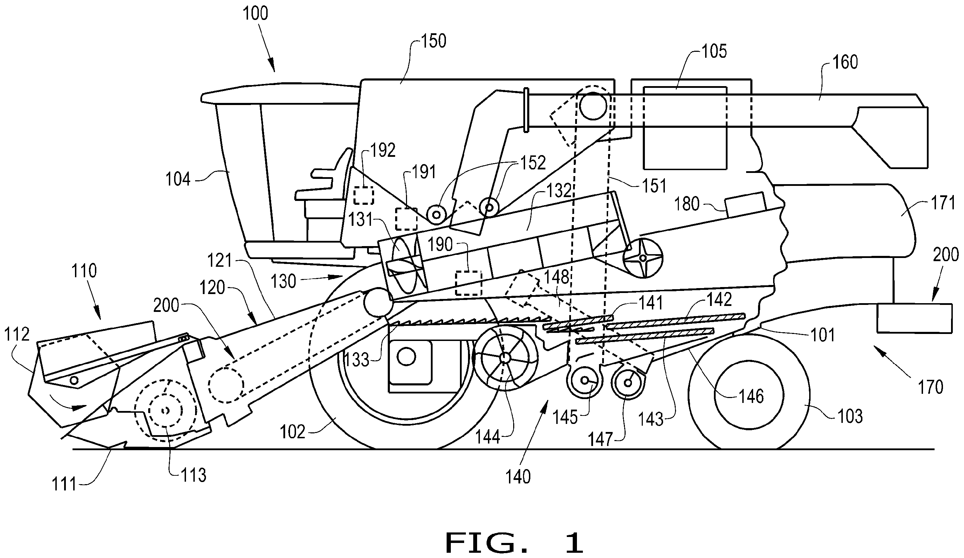

Referring now to the drawings, and more particularly to FIG. 1, there is shown an embodiment of an agricultural harvester 100 in the form of a combine which generally includes a chassis 101, ground engaging wheels 102 and 103, header 110, feeder housing 120, operator cab 104, threshing and separating system 130, cleaning system 140, grain tank 150, and unloading conveyance 160. Front wheels 102 are larger flotation type wheels, and rear wheels 103 are smaller steerable wheels. Motive force is selectively applied to front wheels 102 through a power plant in the form of a diesel engine 105 and a transmission (not shown). Although combine 100 is shown as including wheels, is also to be understood that combine 100 may include tracks, such as full tracks or half tracks.

Header 110 is mounted to the front of combine 100 and includes at least one cutter, which may be in the form of a cutter bar 111, for severing crops from a field during forward motion of combine 100. A rotatable reel 112 feeds the crop into header 110, and a double auger 113 feeds the severed crop laterally inwardly from each side toward feeder housing 120. Feeder housing 120 includes a housing 121 and a conveyor system 200 disposed in the housing 121 to convey the cut crop to threshing and separating system 130. Feeder housing 120 is selectively vertically movable using appropriate actuators, such as hydraulic cylinders (not shown). Header 110 may be coupled to feeder housing 120, such as to housing 121, so vertical movement of feeder housing 120 causes a corresponding vertical movement of header 110.

Threshing and separating system 130 is of the axial-flow type, and generally includes a threshing rotor 131 at least partially enclosed by a rotor cage and rotatable within a corresponding perforated concave 132. The cut crops are threshed and separated by the rotation of rotor 131 within concave 132, and larger elements, such as stalks, leaves and the like are discharged from the rear of combine 100. Smaller elements of crop material including grain and non-grain crop material, including particles lighter than grain, such as chaff, dust and straw, are discharged through perforations of concave 132. Threshing and separating system 130 can also be a different type of system, such as a system with a transverse rotor rather than an axial rotor, etc.

Grain which has been separated by the threshing and separating assembly 130 falls onto a grain pan 133 and is conveyed toward cleaning system 140. Cleaning system 140 may include an optional pre-cleaning sieve 141, an upper sieve 142 (also known as a chaffer sieve or sieve assembly), a lower sieve 143 (also known as a cleaning sieve), and a cleaning fan 144. Grain on sieves 141, 142 and 143 is subjected to a cleaning action by fan 144 which provides an air flow through the sieves to remove chaff and other impurities such as dust from the grain by making this material airborne for discharge from a straw hood 171 of a residue management system 170 of combine 100. Optionally, the chaff and/or straw can proceed through a chopper 180 to be further processed into even smaller particles before discharge out of the combine 100 by a spreader assembly 200. It should be appreciated that the "chopper" 180 referenced herein, which may include knives, may also be what is typically referred to as a "beater", which may include flails, or other construction and that the term "chopper" as used herein refers to any construction which can reduce the particle size of entering crop material by various actions including chopping, flailing, etc. Grain pan 133 and pre-cleaning sieve 141 oscillate in a fore-to-aft manner to transport the grain and finer non-grain crop material to the upper surface of upper sieve 142. Upper sieve 142 and lower sieve 143 are vertically arranged relative to each other, and likewise oscillate in a fore-to-aft manner to spread the grain across sieves 142, 143, while permitting the passage of cleaned grain by gravity through the openings of sieves 142, 143.

Clean grain falls to a clean grain auger 145 positioned crosswise below and toward the front of lower sieve 143. Clean grain auger 145 receives clean grain from each sieve 142, 143 and from a bottom pan 146 of cleaning system 140. Clean grain auger 145 conveys the clean grain laterally to a generally vertically arranged grain elevator 151 for transport to grain tank 150. Tailings from cleaning system 140 fall to a tailings auger trough 147. The tailings are transported via tailings auger 147 and return auger 148 to the upstream end of cleaning system 140 for repeated cleaning action. A pair of grain tank augers 152 at the bottom of grain tank 150 convey the clean grain laterally within grain tank 150 to unloader 160 for discharge from combine 100.

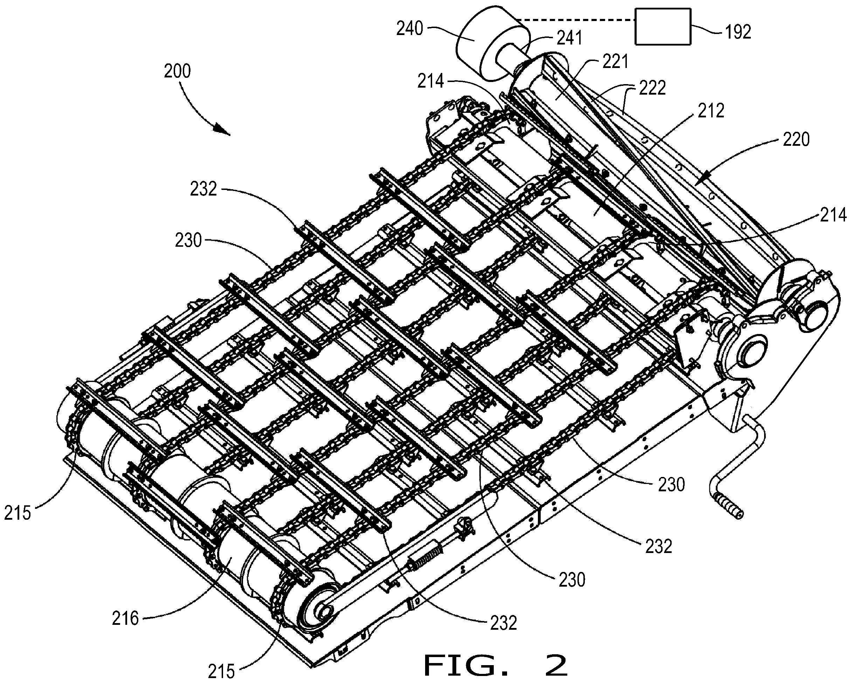

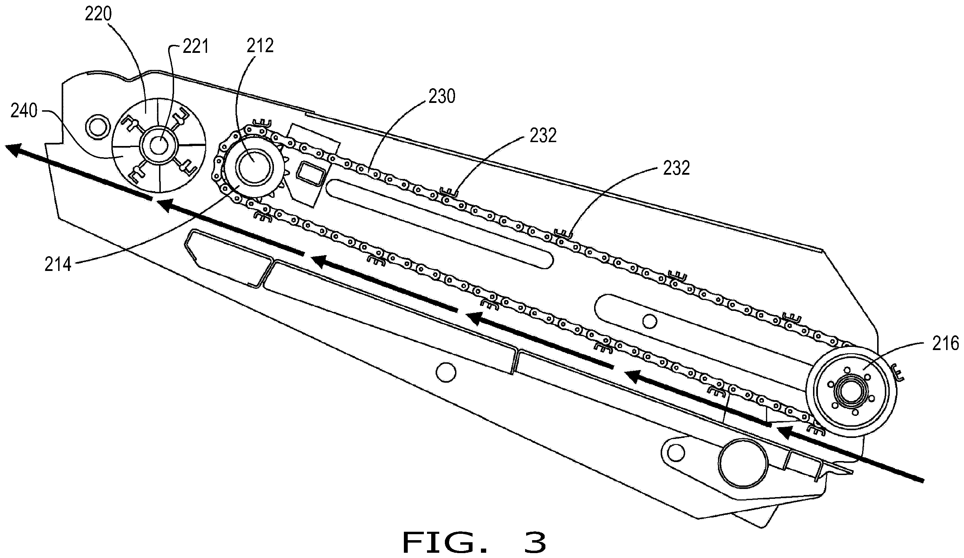

FIG. 2 shows an exemplary conveyor system 200 provided according to the present disclosure. A drive shaft 212 is coupled to at least one drive loop, illustrated as a plurality of drive loops 230, to rotate the drive loop(s) 230. The drive shaft 212 may include a plurality of sprockets 214 each of which engages a respective drive loop 230 which engages a matching sprocket 215 in a lower conveyor idler 216. The drive loop(s) 230 may be, for example, a chain or belt. The drive loop(s) 230 carry a plurality of crop grabbers 232. When there are multiple drive loops 230, the drive loops 230 may be interconnected by the crop grabbers 232, which facilitate movement of the crop from the field to the thresher area. FIG. 3 is a side cut-away view showing crop travel under the conveyor system 200.

A rock beater 220 is provided that includes a rotatable beater roll 221 and at least one fin, illustrated as a plurality of fins 222, carried by the beater roll 221. The rock beater 220 may be placed adjacent to a rear of the housing 121 so the crop material stream is contacted by one or more rotating fins 222 of the rock beater 220 to remove rocks and other solid objects from the crop material stream before the crop material stream enters the threshing and separating system 130. The rocks and other solid objects can be moved into a rock sump or other holding area for removal.

In known feeder housings, the rock beater and the drive shaft rotating the drive loops are powered by a common source of rotational power, such as a single rotating shaft. While such a configuration is effective to power both elements, it has been found that there are limitations to such an arrangement. For example, it is unlikely to have rocks and other solid objects in the crop flow stream when harvesting certain crops, which renders rotation of the rock beater unnecessary. Unnecessarily rotating the rock beater is an inefficient use of power and can possibly damage the crop material for no substantial benefit. Further, it may be desirable to alter the rotational speed of the rock beater, which controls how aggressive rocks and other solid objects are removed, responsively to different crop conditions. When the rock beater and the drive shaft of the conveyor system are powered by a common source of rotational power, altering the rotational speed of the rock beater without affecting the rotational speed of the drive shaft and the associated conveyance rate of crop material requires a gearbox or similar construction that then represents a potential point of failure and ongoing maintenance due to constantly moving parts.

To address the previously described issues with known feeder housings, and referring still to FIGS. 1-3, a motor 240 is provided that is coupled to the beater roll 221 and is configured to rotate the beater roll 221. The motor 240 is an electrically powered motor or a hydraulically powered motor. As used herein, the motor 240 is "powered" electrically or hydraulically in the sense that electrical power or pressurized fluid, respectively, cause an output shaft 241 of the motor 240 to rotate, as is known. Many electrically powered motors and hydraulically powered motors are known, and any suitable electrically or hydraulically powered motor may be utilized according to the present disclosure.

The motor 240 is coupled to the beater roll 221 such that the motor 240 is configured to rotate the beater roll 221 without rotating the drive shaft 212. For example, the motor 240 may be coupled to the beater roll 221 without being coupled to the drive shaft 212. By having the motor 240 rotate the beater roll 221 without rotating the drive shaft 212, a rotational speed of the beater roll 221, and thus the carried fin(s) 222, can be controlled by controlling a rotational speed of the motor 240, *i.e.,* a rotational speed of the output shaft 241, without affecting the rotational speed of the drive shaft 212. Since the rotational speed of the drive shaft 212 is not affected by changes in the rotational speed of the motor 240 and the beater roll 221, the conveyance of crop material by the crop grabbers 232 is minimally, if at all, affected by changing the rotational speed of the beater roll 221. In this respect, the rotational speed of the beater roll 221 and the corresponding rock removing performance can be adjusted easily and conveniently without affecting how crop material is conveyed through the feeder housing 120 by the conveyor system 200.

In some embodiments, the motor 240 is disposed in the housing 121 of the feeder housing 120 so the motor 240 can be in close proximity to the beater roll 221. The motor 240 may, for example, be directly coupled to the beater roll 221 so the rotational speed of the beater roll 221 is generally the same as the rotational speed of the output shaft 241 of the motor 240. It should be appreciated that, as used herein, the motor 240 may be "directly coupled" to the beater roll 221 using a coupling, ***e.g.,*** a universal joint or other type of coupling, so long as the rotational speed of the output shaft 241 of the motor 240 is generally the same as the rotational speed of the beater roll 221. It should be appreciated that there may be a slight deviation in the rotational speed of the output shaft 241 and the beater roll 221 due to mechanical losses in the coupling, as is known in the art. The motor 240 may be coupled to an electrical system 190 (illustrated in FIG. 1) of the agricultural vehicle 100 if the motor 240 is an electrically powered motor so the electrical system 190 can provide electrical power to the motor 240. If the motor 240 is a hydraulically powered motor, the motor 240 may be coupled to a hydraulic system 191 (illustrated in FIG. 1) of the agricultural vehicle 100 so the hydraulic system 191 can provide pressurized fluid to power the motor 240. Many different types of electrical systems and hydraulic systems for agricultural vehicles are known, and any such system may be used so long as the system can provide an appropriate amount of electrical power or pressurized fluid to power the motor 240.

In some embodiments, a controller 192 is provided that is operably coupled to the motor 240 so the controller 192 can control the rotational speed of the motor 240, *i.e.,* control the rotational speed of the output shaft 241. The controller 192 may be operatively coupled to the motor 240 either directly or, in some embodiments, indirectly via the electrical system 190 or hydraulic system 191. The controller 192 is configured to output a motor speed signal that causes adjustment of the rotational speed of the motor 240. If the controller 192 is directly operably coupled to the motor 240, for example, the controller 192 may output the motor speed signal directly to the motor 240 to adjust the rotational speed of the motor 240. Upon receiving the motor speed signal, the motor 240 may, for example, adjust its rotational speed by adjusting the amount of electrical power drawn from the electrical system 190 if the motor 240 is an electrically powered motor or by adjusting one or more valves of a fluid flow system of the motor 240 if the motor 240 is a hydraulically powered motor. If the controller 192 is indirectly operably coupled to the motor 240, the controller 192 may output the motor speed signal to the electrical system 190 to adjust the amount of electrical power delivered to the motor 240 if the motor 240 is an electrically powered motor or output the motor speed signal to the hydraulic system 191 to adjust the amount of pressurized fluid delivered to the motor 240 if the motor 240 is a hydraulically powered motor. It should thus be appreciated that the controller 192 can output the motor speed signal in a variety of ways to adjust the rotational speed of the motor 240 according to the present disclosure.

In some embodiments, the controller 192 is configured to output the motor speed signal responsively to determining that crop conditions have changed, warranting a corresponding change in the rotational speed of the beater roll 221 by adjusting the rotational speed of the motor 240. The controller 192 may, for example, be configured to output the motor speed signal responsively to determining that crop material flow into the housing 121, *i.e.,* a flow rate of crop material, or crop material conditions of crop material flowing into the housing 121, *i.e.,* characteristics of the flowing crop material such as crop material type, moisture content, etc., has changed. For example, a higher flow rate of crop material into the housing 121 may warrant an increase in the rotational speed of the beater roll 221 to handle the additional crop material flow, so the controller 192 may output the motor speed signal so the rotational speed of the motor 240 increases. Another exemplary condition that may warrant the controller 192 outputting the motor speed signal is if the crop material flowing into the housing 121 is a type of crop material that does not generally include rocks or other solid objects in the crop material flow so rotation of the beater roll 221 is unnecessary. In such a scenario, the controller 192 may be configured to output a motor stop signal, directly to the motor 240 or otherwise, so the rotational speed of the motor 240 becomes zero, which will cause the beater roll 221 to stop rotating or free-wheel due to crop flow across the beater roll 221. It should thus be appreciated that the controller 192 can output the motor speed signal and/or motor stop signal responsively to a variety of different crop conditions so the performance of the rock beater 220 is appropriate for the crop harvesting conditions.

From the foregoing, it should be appreciated that the motor 240 rotating the beater roll 221 without rotating the drive shaft 212 allows precise control of the rock beater 220 performance with a minimal effect on crop conveyance through the feeder housing 120. Such control can be accomplished without having to utilize a complex coupling, such as a gearbox, which can reduce cost and maintenance requirements for the feeder housing 120. Further, the rotational speed of the motor 240 and the corresponding rotational speed of the beater roll 221 can be quickly adjusted in response to various harvesting conditions, which can improve performance of the rock beater 220 in different conditions.

## Claims

1. A feeder housing (120) for an agricultural harvester (100), comprising:
a housing (121);
a conveyor system (200) disposed in the housing (121), the conveyor system (200) comprising a drive shaft (212), at least one drive loop (230) coupled to the drive shaft (212) such that rotation of the drive shaft (212) causes rotation of the at least one drive loop (230), and a plurality of crop grabbers (232) coupled to the at least one drive loop (230);
a rock beater (220) disposed in the housing (121) and comprising a rotatable beater roll (221) and at least one fin (222) carried by the beater roll (221); and
a motor (240) coupled to the beater roll (221) and configured to rotate the beater roll (221), the motor (240) comprising an electrically powered motor or a hydraulically powered motor, the motor (240) being coupled to the beater roll (221) such that the motor (240) is configured to rotate the beater roll (221) without rotating the drive shaft (212).

2. The feeder housing (120) of claim 1, wherein the motor (240) is not coupled to the drive shaft (212).

3. The feeder housing (120) of claim 1 or 2, wherein the motor (240) is disposed in the housing (121).

4. The feeder housing (120) of any preceding claim, further comprising a controller (192) operably coupled to the motor (240), the controller (192) being configured to output a motor speed signal to the motor (240) to adjust a rotational speed of the motor (240).

5. The feeder housing (120) of claim 4, wherein the controller (192) is configured to output the motor speed signal responsively to determining that crop material flow into the housing (121) or crop material conditions of crop material flowing into the housing (121) has changed.

6. The feeder housing (120) of claim 4 or 5, wherein the controller (192) is configured to output a motor stop signal to the motor (240) so the rotational speed of the motor (240) becomes zero.

7. The feeder housing (120) of any preceding claim, wherein the motor (240) is directly coupled to the beater roll (221).

8. An agricultural vehicle (100) comprising a chassis (101), a header (110) carried by the chassis (101) and comprising at least one cutter (111) configured to sever crop material, and the feeder housing (120) of any preceding claim carried by the chassis (101) and configured to receive crop material severed by the header (110).

9. The agricultural vehicle (100) of claim 8, further comprising an electrical system (190) configured to provide electrical power, wherein the motor (240) comprises an electrically powered motor coupled to the electrical system (190).

10. The agricultural vehicle (100) of claim 8, further comprising a hydraulic system (191) configured to provide pressurized fluid, wherein the motor (240) comprises a hydraulically powered motor coupled to the hydraulic system (191).

11. The agricultural vehicle (100) of any one of claims 8 to 10, wherein the header (110) is coupled to the feeder housing (120).
